Europäisches Patentamt

European Patent Office

Office européen des brevets

(19)

(11) **EP 1 508 994 A2**

## (12) EUROPEAN PATENT APPLICATION

(43) Date of publication:
**23.02.2005 Bulletin 2005/08**

(51) Int Cl.[7]: **H04L 9/32**, H04L 9/18

(21) Application number: **04004380.4**

(22) Date of filing: **26.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **03.06.2003 JP 2003157444**

(71) Applicant: **Hitachi, Ltd.**
**Chiyoda-ku, Tokyo 101-8010 (JP)**

(72) Inventors:
• **Yoshida, Hirotaka**
  **Chiyoda-ku Tokyo (JP)**
• **Furuya, Soichi**
  **Chiyoda-ku Tokyo (JP)**

(74) Representative: **Strehl Schübel-Hopf & Partner**
**Maximilianstrasse 54**
**80538 München (DE)**

(54) **Message-authenticated apparatus for symmetric-key cipher**

(57)    Authenticated encryption scheme based on stream ciphers and hash functions with in-advance and parallel computation, using random numbers whose length is shorter than 2N with respect to the message length N. The random numbers are generated using a pseudo random-number generator, and divided into blocks. The plaintext is divided into blocks too. Next, the exclusive-OR logical sums of random-number blocks $R_i$ ($1 \leq i \leq N$) and plaintext blocks $P_i$ ($1 \leq i \leq N$) are calculated, thereby acquiring ciphertext blocks $C_i$ ($1 \leq i \leq N$). A hash function ($NH_R(S)$) on the random-number blocks $R_i$ ($2 \leq i \leq N+1$) and the ciphertext blocks $C_i$ ($1 \leq i \leq N$) is calculated as well, thereby generating ($C_{N+1}$ and $_{N+2}$) the message authentication code (MAC) of the generated ciphertext (1022) $C_i$ ($1 \leq i \leq N$). The random number generation can be carried out in advance of the authenticated encryption, wherein the generation of the ciphertext and the message authentication code can be executed in parallel. This increases the overall speed of the scheme.

FIG. 9

**Description**

This application claims priority based on a Japanese patent application, No. 2003-157444 filed on Jun 3, 2003, the entire contents of which are incorporated herein by reference.

BACKGROUND OF THE INVENTION

The present invention relates to technologies for ensuring the security of secret information.

In the conventional cryptographic processing apparatuses, block ciphers and stream ciphers whose object is to keep data confidential had been proposed. Also, starting with AES (: Advanced Encryption Standard), various types of algorithms have been proposed as the block ciphers.

In the block ciphers, the security and properties of the entire cryptographic processing are discussed based on block-cipher operation modes such as ECB, CBC, CFB, OFB, and counter modes. Up to the present time, however, only an iaPCBC mode has been known as a mode of being capable of simultaneously performing an encryption processing and a forgery detection. The remaining modes find it impossible to perform the forgery detection by their own. The iaPCBC mode has been addressed in a document "Lecture Notes in Computer Science, Vol. 1796", V. Gligor, P. Donescu, Springer-Verlag, pp. 153-171, (2000) (hereinafter document 1)

The iaPCBC mode, which is the mode of using the block cipher, finds it impossible to perform such processings as a parallel processing and an in-advance computation in the above-described encryption processing. Accordingly, it had been difficult to implement the iaPCBC mode into an environment where a high-speed processing is requested. In contrast thereto, there has been proposed a method of generating a forgery-detection-purpose cryptology-based checksum called "Message Authentication Code" (which, hereinafter, will be referred to as "MAC"). According to this method, in the encryption processing by the above-described block-cipher operation modes as well, the MAC generation processing is implemented as required at the same time and as a totally independent mechanism. This has allowed the simultaneous execution of the encryption processing and the forgery detection. In this case, however, the following points become necessary: Namely, totally independent cryptology-based keys need to be shared two times, i.e., the key for the encryption and the key for the message authentication need to be shared. Moreover, data to be encrypted needs to be subjected to the two-time processings, i.e., the encryption processing and the MAC generation processing. These necessary points have resulted in an apprehension that the system becomes complicated, or the system becomes unsuitable for the processing of long data, or the like. Furthermore, processing speeds by the block ciphers are lower as compared with present-day communications speeds. Consequently, it has been difficult to apply these combination technologies of the block ciphers and MAC to utilizations where the high-speed processing such as a gigabit or terabit processing is requested.

Also, it had been known that the combination of MAC and light processings makes it possible to implement operation modes. The stream ciphers, which use these operation modes as their modes, allow the simultaneous execution of the encryption processing and the forgery detection. In addition thereto, processings by the stream ciphers are high-speed ones which are at a rate of two to twenty times higher as compared with the processings by the above-described block ciphers. Similarly with the combinations of the block ciphers and MAC, however, whatever MAC generation method requires pseudo random numbers whose length is two times longer than that of a message. This has resulted in a situation that it takes a time to generate the necessary pseudo random numbers, or the two-time processings need to be performed for a single message, or the like.

Considering the MAC generation methods in more detail, mechanisms and a computation amount, which become necessary for the original stream ciphers in an attendant manner, are exceedingly large in number and amount, respectively. For example, in such MAC generation methods as UMAC, a secure Hash function becomes necessary which guarantees a one-way property without a collision in cryptology terms. Accordingly, the use as the stream ciphers requires the further implementation of this Hash function into a pseudo random-number generator. UMAC has been addressed in a document "UMAC: Fast and Secure Message Authentication", Black, Halevi, Krawczyk, Krovetz, Rogaway, Advances in Cryptology, -CRYPTO' 99, Lecture Notes in Computer Science, Vol. 1666, Springer-Verlag, (1999) (hereinafter document 2)

SUMMARY OF THE INVENTION

Most of the conventional cryptographic technologies, at the time of a decryption, have found it impossible to perform the message authentication by their own. Namely, when performing the message authentication, most of the technologies have required the following additional conditions: The necessity for sharing the different two keys, the necessity for the random numbers whose length is two times longer than that of a message, the independent processings, the additional implementation of another cryptology-based element function, and the like.

The problems concerning the processing-speed aspect are as follows: In the block-cipher operation modes known so far, there exists no possibility of implementing the degree of parallelism, the in-advance computation, and the like. This gives rise to the problem that the operation modes are unsuitable for a highly parallel processing and a high-speed processing. Moreover, in the stream-cipher operation modes known so far, the operation amount and the necessary random numbers are large in amount and number, respectively. For this reason, the processing speeds in the software implementations are of basically the same order as the ones by the block ciphers. This gives rise to a problem that an even higher-speed processing is requested.

The present invention provides an efficient, provable and secure cryptographic method. More particularly, it provides a message-authenticated cryptographic method and its apparatus that allow a message authenticity simultaneously with a decryption, and that are provable about the security in the sense of a data confidentiality and the data authenticity.

The present invention provides a common-key cipher method and its apparatus that possess advantages of an in-advance computation and a parallel processing while making the best possible use of the high-speed processing performance of a pseudo random-number generator.

The present invention provides a cryptographic method and its apparatus that not only allow a processing which is higher than the conventional block ciphers, but also allow a processing which can be implemented on a single path and is exceedingly effective in software.

The present invention provides a stream-cipher method and its apparatus that can be implemented using a small program.

The present invention, in its one mode, generates random numbers so as to perform an encryption processing and an authentication processing, thereby accomplishing an in-advance computation and a parallel computation. Also, the encryption processing and the authentication processing are performed, using the generated random numbers whose length is shorter than 2N with reference to the message length N.

Concretely, the random numbers are generated using the pseudo random-number generator, and the generated random numbers are divided on each block basis. Also, a plaintext is divided on each block basis as well. Next, the exclusive-OR logical sum of each random-number block and each plaintext block is figured out, thereby acquiring each ciphertext block. Moreover, the hash function NH addressed in the document 2 performs a key-accompanying input of the random-number blocks, thereby generating the message authentication code of the generated ciphertext. Here, the random-number generation is executable by the in-advance computation, and the ciphertext-block generating operation is executable by the parallel processing, and processing the hash function NH is also executable by the parallel processing. This condition allows the implementation of the high-speed computations.

According to the present invention, when implementing the message-authentication-equipped cryptographic method by the software programs, it becomes possible to accomplish the even higher speeding-up of the processing speed.

These and other benefits are described throughout the present specification. A further understanding of the nature and advantages of the invention may be realized by reference to the remaining portions of the specification and the attached drawings.

BRIEF DESCRIPTION OF THE DRAWINGS

FIG. 1 illustrates the system configuration diagram of each embodiment.
FIG. 2 illustrates the flow diagram of the plaintext-preparation subroutine.
FIG. 3 illustrates the flow diagram of the random-number generation subroutine.
FIG. 4 illustrates the flow diagram of the encryption subroutine.
FIG. 5 illustrates the flow diagram of the decryption-processing program in FIG. 1.
FIG. 6 illustrates the flow diagram of the ciphertext-preparation subroutine.
FIG. 7 illustrates the flow diagram of the decryption subroutine.
FIG. 8 illustrates the flow diagram of the plaintext cut-out subroutine.
FIG. 9 illustrates the diagram of the encryption processing by the data blocks.
FIG. 10 illustrates the diagram of the decryption processing by the data blocks.
FIG. 11 illustrates the flow diagram of the hash function NH.
FIG. 12 illustrates the flow diagram of the random-number generation 2 subroutine in the second embodiment.
FIG. 13 illustrates the flow diagram of the encryption 2 subroutine in the second embodiment.
FIG. 14 illustrates the flow diagram of the decryption-processing program in the second embodiment.
FIG. 15 illustrates the diagram of the encryption processing in the second embodiment by the data blocks.
FIG. 16 illustrates the diagram of the decryption processing in the second embodiment by the data blocks.

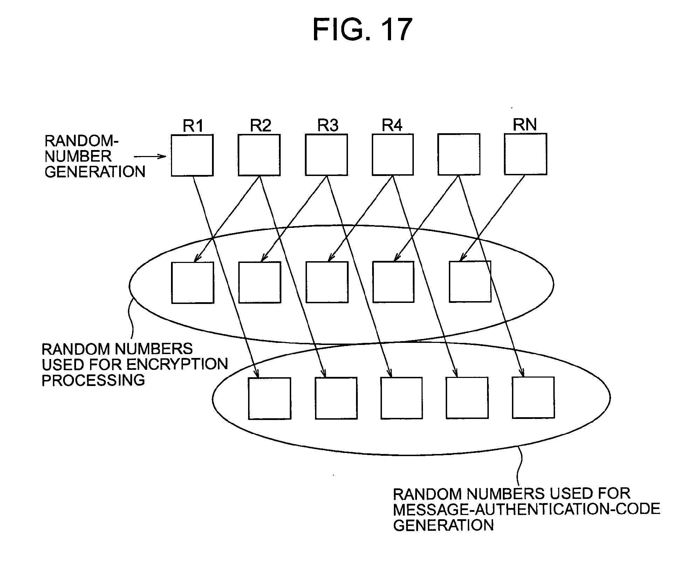

FIG. 17 illustrates a conceptual diagram of the random-number sharing method in the encryption processing and the authentication processing in the first embodiment.

DETAILED DESCRIPTION OF THE EMBODIMENTS

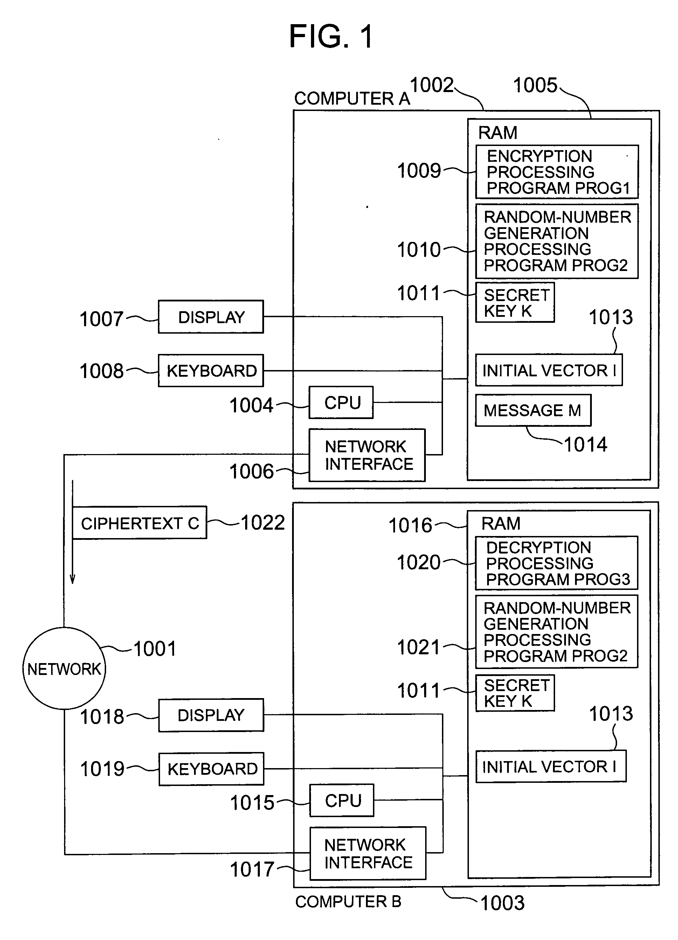

Hereinafter, referring to the drawings, the explanation will be given below concerning a first embodiment of the present invention. Incidentally, an exclusive-OR logical sum on each bit basis is denoted by EOR in the following explanation, and, in the respective drawings, this logical sum is denoted by a notation resulting from surrounding a plus notation with a circle. (First Embodiment) FIG. 1 illustrates a system configuration which includes a computer A 1002 and a computer B 1003 connected to each other via a network 1001, and the object of which is to perform cryptographic communications from the computer A 1002 to the computer B 1003. The computer A 1002 includes therein an operation apparatus (which, hereinafter, will be referred to as "CPU") 1004, a storage apparatus (which, hereinafter, will be referred to as "RAM", and it is all right whether this apparatus is of volatile property or non-volatile property) 1005, and a network interface 1006. A display 1007 and a keyboard 1008 for a user to operate the computer A 1002 are connected thereto at the outside thereof. Information stored in the RAM 1005 are as follows: An encryption processing program PROG1_1009, a random-number generation processing program PROG2_1010, a secret key K 1011, i.e., secret information shared only between the computer A 1002 and the computer B 1003, an initial vector I 1013, i.e., data shared between the computer A 1002 and the computer B 1003, and a message M 1014 that the user wishes to encrypt and transmit to the computer B 1003. The computer B 1003 includes therein a CPU 1015, a RAM 1016, and a network interface 1017. A display 1018 and a keyboard 1019 for a user to operate the computer B 1003 are connected thereto at the outside thereof. Information stored in the RAM 1016 are as follows: A decryption processing program PROG3_1020, a random-number generation processing program PROG2_1021, and the secret key K 1011.

The computer A 1002 executes the encryption processing program PROG1_1009 so as to create a ciphertext C 1022 of the message M 1014, then transmitting the ciphertext C 1022 to the network 1001 via the network interface 1006. The computer B 1003, after receiving the ciphertext C 1022 via the network interface 1017, executes the decryption-processing program PROG3_1020. Then, if no forgery has been detected, the computer B 1003 stores the decrypted result into the RAM 1016.

The respective programs can be installed into the RAMs from the partner computers or another computer via a communications medium, i.e., the network 1001 or a carrier wave propagating on the network 1001, or via a transportable-type storage medium such as a CD or a FD. The respective programs can also be configured so that the programs will operate under (not-illustrated) operating systems of the respective computers. Also, each CPU reads out each program from each memory and executes each program, thereby implementing the processing by each program on each computer.

In the computer A 1002, the encryption processing program PROG1_1009 is read out from the RAM 1005, then being executed by the CPU 1004. The encryption-processing program PROG1_1009 calls up, as a subroutine, the random-number generation processing program PROG2_1010 in the inside, then outputting the ciphertext C 1022 to the inputted secret key K 1011 and the message M 1014.

In the computer B 1003, the decryption-processing program PROG3_1020 is read out from the RAM 1016, then being executed by the CPU 1015. The decryption-processing program PROG3_1020 calls up, as a subroutine, the random-number generation processing program PROG2_1021 in the inside, then outputting a message or a forgery -detection warning to the inputted secret key K 1011 and the ciphertext C 1022.

The explanation will be given below concerning the processing flow by the encryption-processing program PROG1_1009.

Step 2002: Data set subroutine. Inputting the secret key K is awaited.
Step 2003: Plaintext-preparation subroutine.
Inputting the plaintext is awaited, and predetermined paddings are performed after the plaintext has been presented, and finally, the plaintext is separated on a 64-bit basis so as to output a string $P_i$ ($1 \leq i \leq N$) of plaintext blocks. Here, N is assumed to be an even number.
Step 2004: Random-number generation subroutine. A pseudo random-number string $R_i$ ($1 \leq i \leq N+1$) is outputted from the secret key K and the initial vector I.
Step 2005: Encryption subroutine. Ciphertext blocks $C_i$ ($1 \leq i \leq N+2$) are outputted, using the pseudo random-number string $R_i$ ($1 \leq i \leq N+1$) and the plaintext-block string $P_i$ ($1 \leq i \leq N$).
Step 2006: The ciphertext blocks $C_i$ ($1 \leq i \leq N+2$) acquired at the step 2005 are bit-connected in the sequence, then being outputted as the ciphertext C.

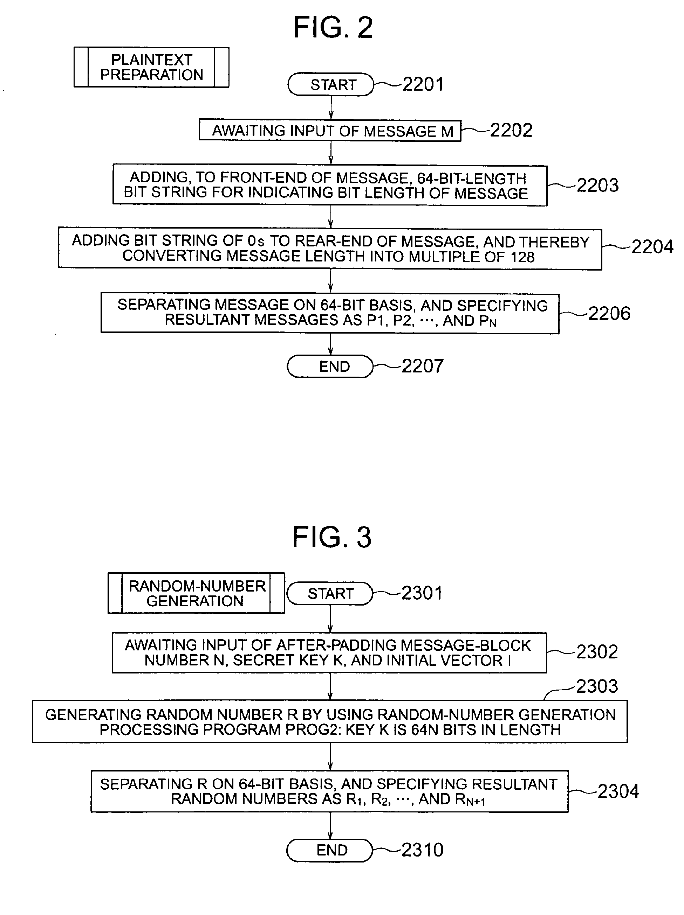

Referring to FIG. 2, the processing by the plaintext-preparation subroutine will be explained below.

Step 2202: Inputting the message M to be used for the cryptographic processing is awaited. The message M is inputted from the keyboard 1008, or has been stored in the RAM, or is introduced from another storage medium. Step 2203: A padding is performed with data for indicating the length of the message M. Namely, 64-bit binary-number data for indicating the bit length of the message M is added to the front-end of the message M.
Step 2204: A padding for making the message length certain constant sizes. Namely, for the subsequent cryptographic processing, the message data after the padding is converted into an integral multiple of 128 bits. Concretely, assuming that the length of the message M is equal to L bits, the rear-end of the message to which the length data has been added at the step 2203 is padded with 0s which are equal to 128-(L(mod 128)) in number.

Step 2206: The message data is divided into the plaintext blocks. Namely, the message data acquired as the result of the step 2204 is separated into the 64-bit blocks, and the resultant blocks are specified as $P_1$, $P_2$, ..., and $P_N$ in the sequence.

Referring to FIG. 3, the processing by the random-number generation subroutine will be explained below.

Step 2302: The necessary parameters are inputted. Namely, the parameters acquired are the number N of the after-padding message blocks, the initial vector I, and the secret key K.

Step 2303: The pseudo random-number string R is generated. Namely, the random-number generation processing program PROG2 is called up, thereby generating the 64 (N+1) -bit-length pseudo random-number string. This string then outputted is specified as R. Step 2304: The pseudo random-number string R is divided into the blocks. Namely, the pseudo random-number string R is separated on a 64-bit basis, and the resultant pseudo random-number blocks are specified as $R_1$, $R_2$, ..., and $R_{N+1}$ in the sequence.

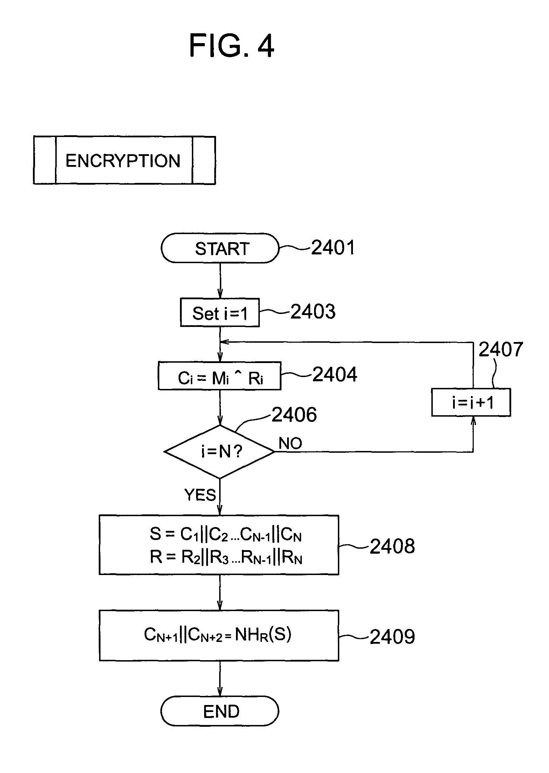

Referring to FIG. 4, the processing by the encryption and message-authentication-code generation set-up subroutine will be explained below.

Step 2403: A counter i is initialized. Namely, set i = 1.

Step 2404: The ciphertext blocks $C_i$ are computed. Namely, set $C_i \leftarrow M_i$ EOR $R_i$.

Step 2406: If i = N, a step 2408 is executed.

Step 2407: The counter i is incremented, then returning back to the step 2404.

Step 2408: $C_i$ ($1 \leq i \leq N$) are bit-connected in the sequence, then being specified as S. $R_i$ ($2 \leq i \leq N+1$) are bit-connected in the sequence, then being specified as R.

Step 2409: An output from $NH_R(S)$ is separated on a 64-bit basis, and the resultant outputs are specified as $C_{N+1}$ and $C_{N+2}$.

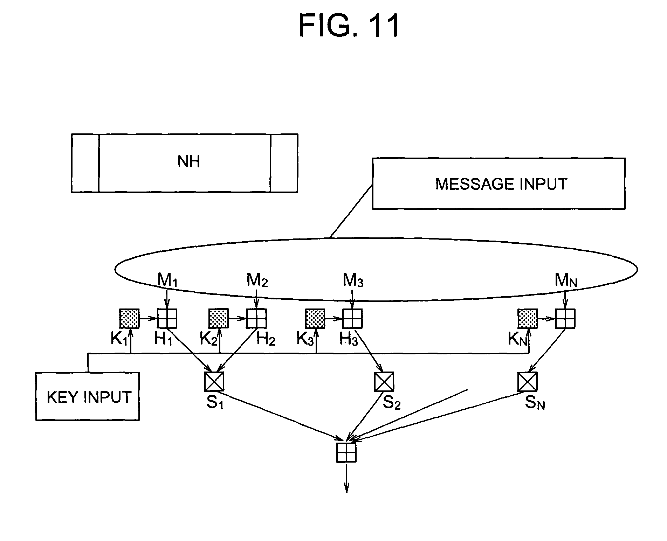

The explanation will be given later regarding the hash function $NH_R(S)$, referring to FIG. 11.

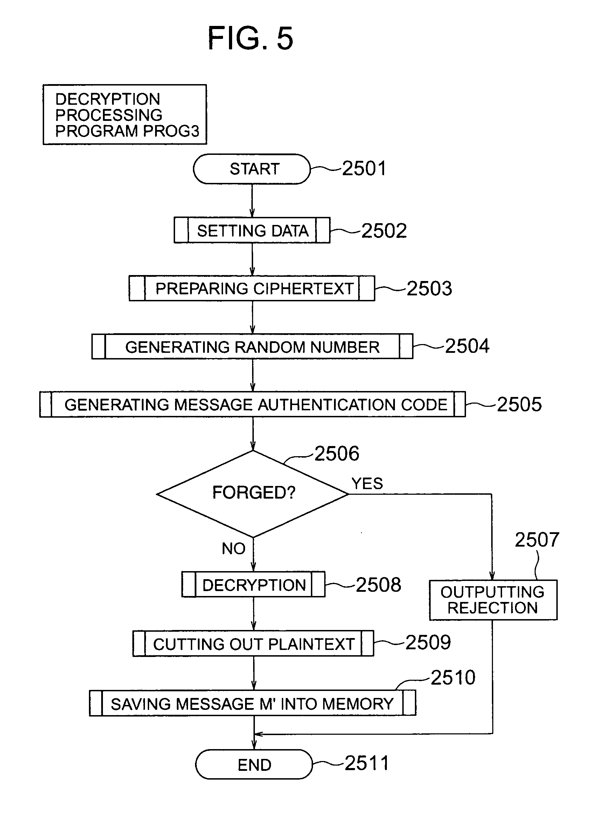

Referring to FIG. 5, the explanation will be given below concerning the processing flow by the decryption processing program PROG3_1020.

Step 2502: Data set subroutine. Inputting the secret key K is awaited.

Step 2503: Ciphertext-preparation subroutine. Inputting the ciphertext C' is awaited, and, after the ciphertext C' has been presented, the ciphertext C' is separated on a 64-bit basis so as to output a string $C'_i$ ($1 \leq i \leq N+2$) of ciphertext blocks.

Step 2504: Random-number generation subroutine. The pseudo random-number string $R_i$ ($1 \leq i \leq N+1$) is outputted from the secret key K.

Step 2505: $C'_i$ ($1 \leq i \leq N$) are bit-connected in the sequence, then being specified as S. $R_i$ ($2 \leq i \leq N+1$) are bit-connected in the sequence, then being specified as R. Next, $NH_R(S)$ is computed.

Step 2506: If $NH_R(S) = C'_{N+1} || C'_{N+2}$, the processing proceeds to a step 2508. Otherwise, the processing proceeds to a step 2507.

Step 2507: A rejection (i.e., non-acceptance) is outputted. The processing proceeds to a step 2511.

Step 2508: Decryption subroutine. The string $P'_i$ ($1 \leq i \leq N$) of the plaintext blocks is outputted, using the pseudo random-number string $R_i$ ($1 \leq i \leq N$) and the ciphertext-block string $C'_i$ ($1 \leq i \leq N$).

Step 2509: Plaintext cut-out subroutine. The string $P'_i$ ($1 \leq i \leq N$) of the plaintext blocks is divided into data strings L' and M'.

Step 2510: M' is stored into the RAM.

At the step 2511, the decryption processing program outputs a result (i.e., the acceptance/non-acceptance or the decrypted result) to the display 1018, thereby informing the user of the result.

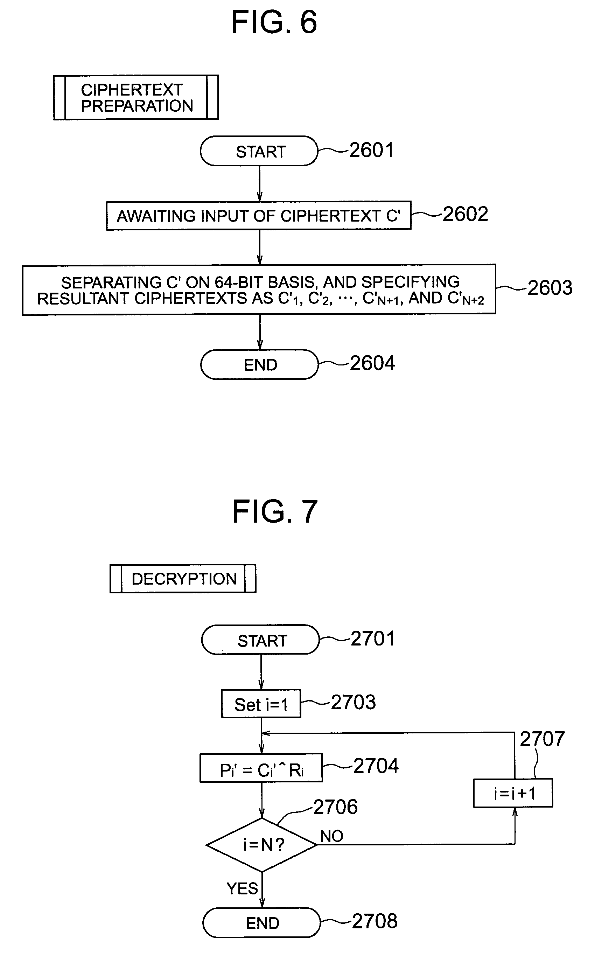

Referring to FIG. 6, the processing by the ciphertext-preparation subroutine will be explained below.

Step 2602: Inputting the ciphertext C' is awaited.

Step 2603: The ciphertext C' is separated on a 64-bit basis, and the resultant ciphertext blocks are specified as $C'_1$, $C'_2$, ..., $C'_{N+1}$, and $C'_{N+2}$ in the sequence.

Referring to FIG. 7, the processing by the decryption subroutine will be explained below.

Step 2703: The counter i is initialized. Namely, set i = 1.

Step 2704: The plaintext blocks $P'_i$ are computed. Namely, set $P'_i = C'_i \wedge R_i$.

Step 2706: If the case is not i = N, a step 2707 is executed.

Step 2707: The counter i is incremented, then returning back to the step 2704.

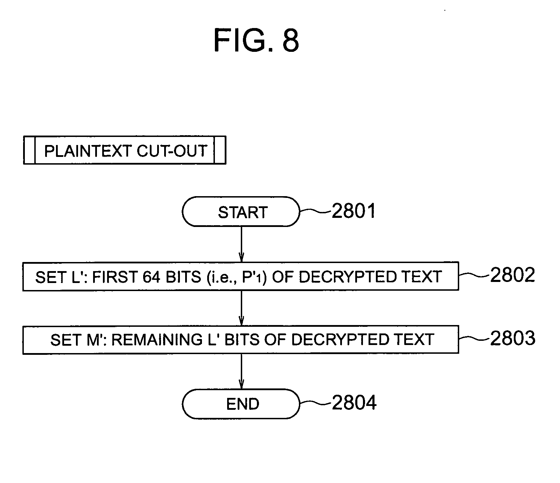

Referring to FIG. 8, the processing by the plaintext cut-out subroutine will be explained below. Step 2802: L' is set as the first 64-bit plaintext block (i. e., $P'_1$).

Step 2803: M' is set as, of the decrypted-text blocks, the remaining L'-bit data which starts from the highest-order bit of $P'_2$.

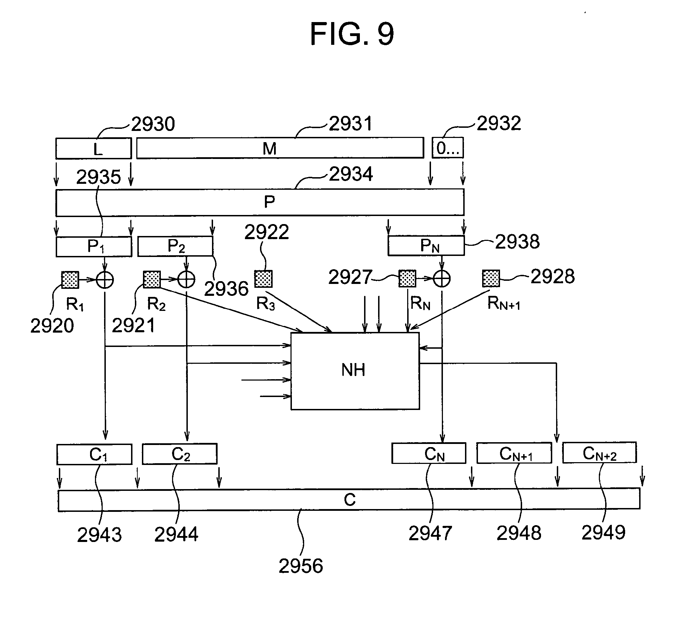

FIG. 9 is an explanatory diagram of the encryption processing.

A length 2930 and a proper padding 2932 are each added to a message M 2931, thereby creating a plaintext P 2934.

This plaintext P 2934 is block-divided on a 64-bit basis, and the resultant plaintext blocks are specified as $P_1$_2935, $P_2$_2936, ..., and $P_N$_2938, respectively.

An exclusive-OR logical sum of $P_1$_2935 with a random-number block $R_1$_2920 is figured out, thereby acquiring a ciphertext block $C_1$_2943.

An exclusive-OR logical sum of $P_2$_2936 with a random-number block $R_2$_2921 is figured out, thereby acquiring a ciphertext block $C_2$_2944.

These processings are similarly performed until $P_N$_2938, thereby acquiring the ciphertext blocks $C_1$_2943, $C_2$_2944, ..., and $C_N$_2947. Next, $NH_R$ (S) is computed, selecting R and S as the inputs. Here, R results from connecting $R_2$_2921, $R_3$_2922, ..., and $R_{N+1}$_2928 in this sequence, and S results from connecting $C_1$_2943, $C_2$_2944, ..., and $C_N$_2947 in this sequence. Moreover, the computed output from $NH_R(S)$ is block-divided into $C_{N+1}$_2948 and $C_{N+2}$_2949. Furthermore, $C_1$_2943, $C_2$_2944, ..., $C_N$_2947, $C_{N+1}$_2948, and $C_{N+2}$_2949 are connected in this sequence, thereby acquiring a ciphertext C_2956.

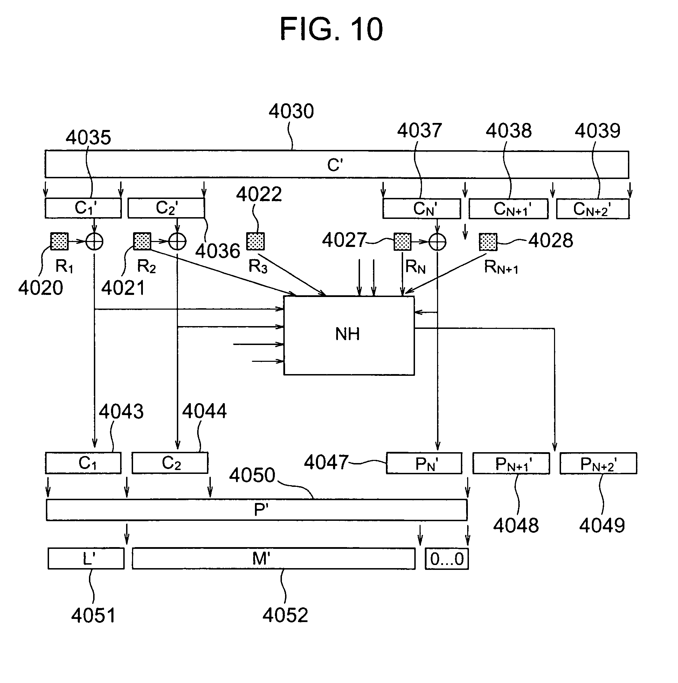

FIG. 10 is an explanatory diagram of the decryption processing.

A ciphertext C'_4030 is divided into 64-bit blocks, and the resultant ciphertext blocks are specified as $C'_1$_4035, $C'_2$_4036, ..., $C'_N$_4037, $C'_{N+1}$_4038, and $C'_{N+2}$_4039. Next, $NH_R$ (S) is computed, selecting R and S as the inputs. Here, R results from connecting $R_2$_4021, $R_3$_4022, ..., and $R_{N+1}$_4028 in this sequence, and S results from connecting $C'_1$_4035, $C'_2$_4036, ..., and $C'_N$_4037 in this sequence. If $NH_R$ (S) = $C'_{N+1}$_4038|| $C'_{N+2}$_4039, the processing proceeds to the next step.

An exclusive-OR logical sum of $C'_1$_4035 with $R_1$_4020 is figured out, thereby acquiring a plaintext block $P'_1$_4043.

An exclusive-OR logical sum of $C'_2$_4036 with $R_2$_4021 is figured out, thereby acquiring a plaintext block $P'_2$_4044.

These processings are similarly performed until $C'_N$_4037, thereby acquiring the plaintext blocks $P'_1$_4043, $P'_2$_4044, ..., and $P'_N$_4047. After that, these blocks are connected in this sequence, then being specified as a plaintext P'_4050. This plaintext P'_4050 is divided into L'_4051 and M'_4052.

Referring to FIG. 11, the explanation will be given below regarding the hash function $NH_R(S)$ addressed in the document 2.

Selecting the message M and the key K as the inputs, this function generates and outputs the message authentication code C. This message-authentication-code generation is executed as follows: Also, in the following algorithm, an arrow $\leftarrow$ and a notation || denote data substitution and data connection, respectively. Firstly, assume that M = $M_1$|| ... || $M_N$ and K = $K_1$||... || $K_N$.

$$H_i \leftarrow M_i + K_i \ (1 \leq i \leq N)$$

$$S_i \leftarrow H_{2i-1} \times H_{2i} \ (1 \leq i \leq N/2)$$

$$C \leftarrow S_1 + S_2 + ... + S_{N/2}$$

Finally, the message authentication code C is outputted.

In the first embodiment, the pseudo random numbers are necessary for the two processings, i.e., the cryptographic processing and the message-authentication-code generation. Here, the length of the pseudo random numbers is satisfying enough if it is substantially the same as that of the message.

Also, on a computer where a general-purpose CPU is employed, the pseudo random-number generator according to the present embodiment allows the implementation of the random-number generation processings which are more than 2 times higher as compared with the ones by AES, i.e., the highest cipher among the block ciphers. Consequently, the present embodiment allows the implementation of the processings which, on one and the same environment, are more than 2 times higher as compared with the iaPCBC mode which is the conventional technology. (Second Embodiment) Hereinafter, the explanation will be given below concerning the second embodiment of the present invention. The second embodiment, basically, is the same as the first one, and thus only the modified points will be explained below.

The explanation will be given below regarding the processing flow by the encryption processing program PROG1_1009.

Step 5002: Data set subroutine. Inputting the secret key K is awaited.

Step 5003: Plaintext-preparation subroutine. Inputting the plaintext is awaited, and predetermined paddings are performed after the plaintext has been presented, and finally, the plaintext is separated on a 64-bit basis so as to output a string $P_i$ $(1 \leq i \leq N)$ of plaintext blocks. Here, N is assumed to be an even number.

Step 5004: Random-number generation subroutine. A 64(3N/2+1)-bit pseudo random-number string is outputted from the secret key K and the initial vector I.

Step 5005: Encryption subroutine. Ciphertext blocks $C_i$ $(1 \leq i \leq N+2)$ are outputted, using the pseudo random-number string acquired at the step 5004 and the plaintext-block string $P_i$ ($1 \leq i \leq N$).

Step 5006: The ciphertext blocks $C_i$ ($1 \leq i \leq N+2$) acquired at the step 5005 are bit-connected in the sequence, then being outputted as the ciphertext C.

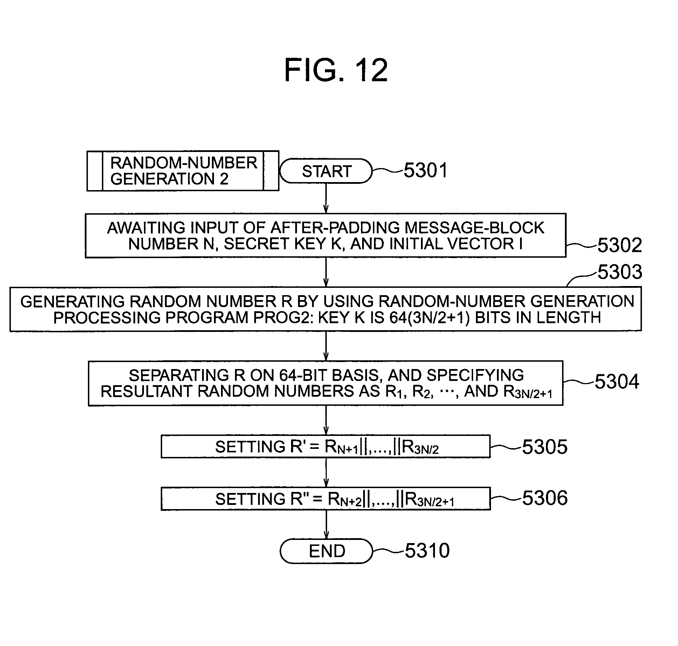

Referring to FIG. 12, the processing by the random-number generation subroutine will be explained below.

Step 5302: The necessary parameters are inputted. Namely, the parameters acquired are the number N of the after-padding message blocks, the initial vector I, and the secret key K.

Step 5303: The pseudo random-number string R is generated. Namely, the random-number generation processing program PROG2 is called up, thereby generating the $64(3N/2+1)$-bit pseudo random-number string R.

Step 5304: The pseudo random-number string R is divided into the blocks. Namely, the pseudo random-number string R is separated on a 64-bit basis, and the resultant blocks are specified as $R_1$, $R_2$, ..., $R_{N+1}$, ..., and $R_{3N/2+1}$ in the sequence.

Step 5305: $R_{N+1}$, ..., and $R_{3N/2}$ are connected in this sequence, then being specified as R'.

Step 5306: $R_{N+2}$, ..., and $R_{3N/2+1}$ are connected in this sequence, then being specified as R".

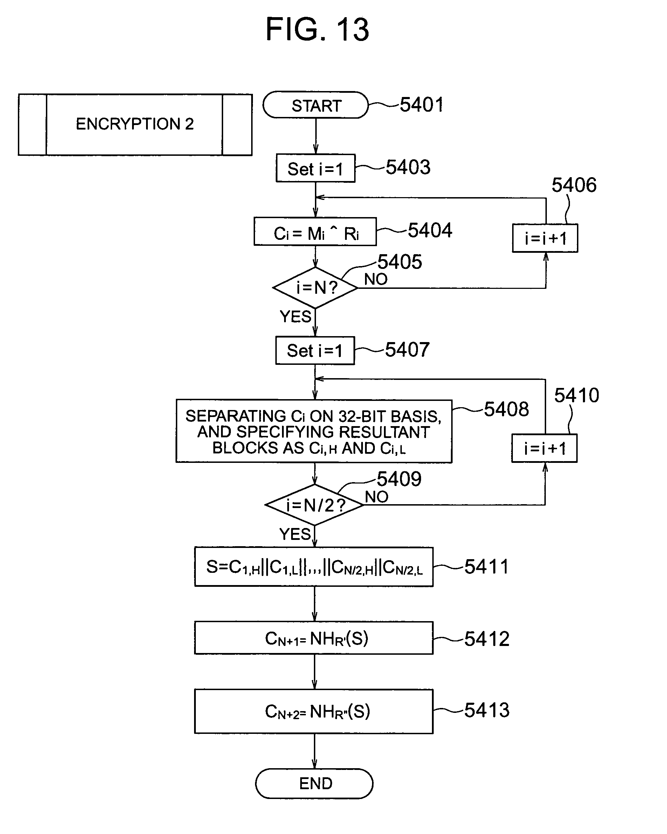

Referring to FIG. 13, the processing by the encryption and message-authentication-code generation set-up subroutine will be explained below.

Step 5403: A counter i is initialized. Namely, set i = 1.

Step 5404: The ciphertext blocks $C_i$ are computed. Namely, set $C_i \leftarrow M_i$ EOR $R_i$.

Step 5405: If i = N, a step 5407 is executed.

Step 5406: The counter i is incremented, then returning back to the step 5404.

Step 5407: The counter i is initialized. Namely, set i = 1.

Step 5408: $C_i$ are separated on a 32-bit basis, and the resultant blocks are specified as $C_{i, H}$ and $C_{i, L}$.

Step 5409: If i = N/2, a step 5411 is executed.

Step 5410: The counter i is incremented, then returning back to the step 5408.

Step 5411: $C_{1, H}$, $C_{1, L}$, ..., $C_{N/2, H}$, and $C_{N,2, L}$ are bit-connected in the sequence, then being specified as S. Step 5412: An output from $NH_{R'}$ (S) is specified as $C_{N+1}$. Step 5413: An output from $NH_{R''}$ (S) is specified as $C_{N+2}$.

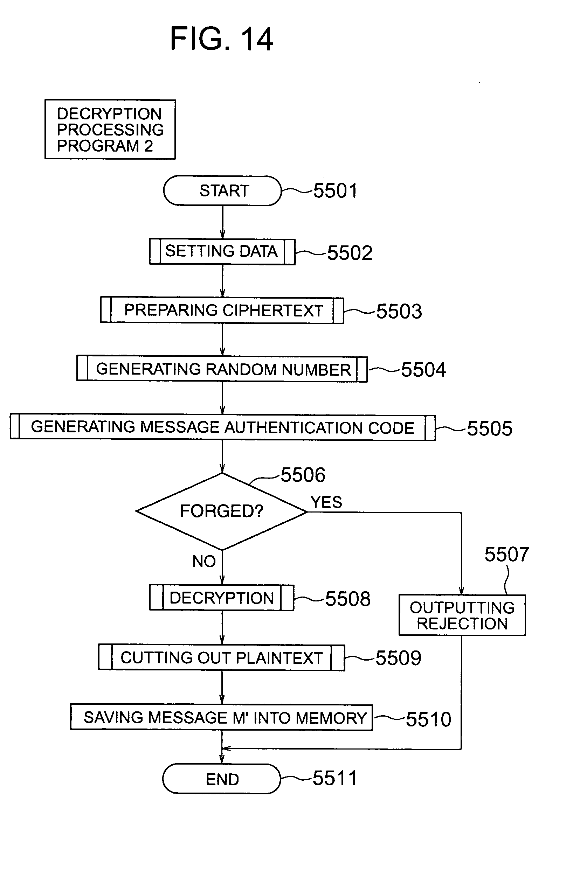

Referring to FIG. 14, the explanation will be given below regarding the processing flow by the decryption-processing program PROG3_1020.

Step 5502: Data set subroutine. Inputting the secret key K is awaited.

Step 5503: Ciphertext-preparation subroutine. Inputting the ciphertext C' is awaited, and, after the ciphertext C' has been presented, the ciphertext C' is separated on a 64-bit basis so as to output a string $C'_i$ ($1 \leq i \leq N+2$) of ciphertext blocks.

Step 5504: Random-number generation subroutine. The pseudo random-number string $R_i$ ($1 \leq i \leq 3N/2+1$), R', and R" are outputted from the secret key K.

Step 5505: $C'_i$ ($1 \leq i \leq N$) are bit-connected in the sequence, then being specified as S. Next, $NH_{R'}(S)$ and $NH_{R''}$ (S) are computed.

Step 5506: If $NH_{R'}$ (S) = $C'_{N+1}$ and $NH_{R''}$ (S) = $C'_{N+2}$, the processing proceeds to a step 5508. Otherwise, the processing proceeds to a step 5507.

Step 5507: A rejection (i.e., non-acceptance) is outputted. The processing proceeds to a step 5511.

Step 5508: Decryption subroutine. The string $P'_i$ ($1 \leq i \leq N$) of the plaintext blocks is outputted, using the pseudo random-number string $R_i$ ($1 \leq i \leq N$) and the ciphertext-block string $C'_i$ ($1 \leq i \leq N$).

Step 5509: Plaintext cut-out subroutine. The string $P'_i$ of the plaintext blocks is divided into data strings L' and M'.

Step 5510: M' is stored into the RAM.

At the step 5511, the decryption processing program outputs a result (i.e., the acceptance/non-acceptance or the decrypted result) to the display 1018, thereby informing the user of the result.

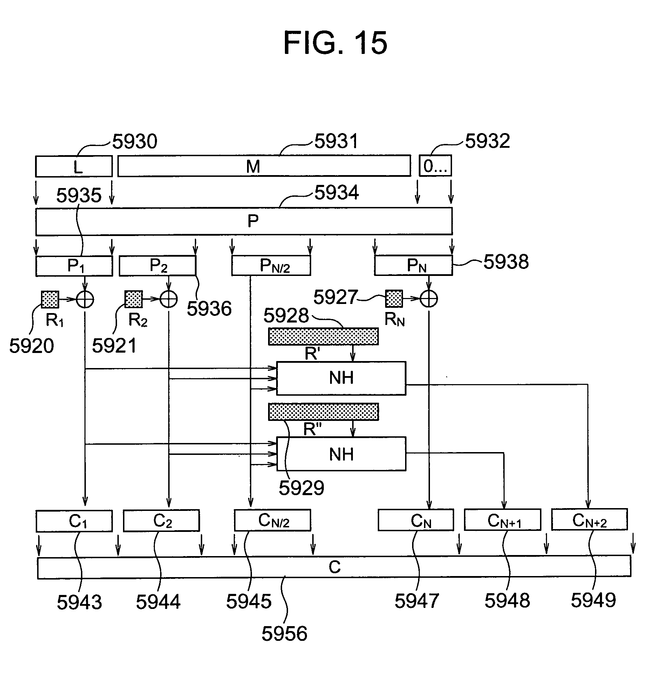

FIG. 15 is an explanatory diagram of the encryption processing.

A length 5930 and a proper padding 5932 are each added to a message M 5931, thereby creating a plaintext P 5934. This plaintext P 5934 is block-divided on a 64-bit basis, and the resultant plaintext blocks are specified as $P_1\_5935$, $P_2\_5936$, $P_{N/2}\_5937$, ..., and $P_N\_5938$, respectively. An exclusive-OR logical sum of $P_1\_5935$ with $R_1\_5920$ is figured out, thereby acquiring a ciphertext block $C_1\_5943$. An exclusive-OR logical sum of $P_2\_5936$ with $R_2\_5921$ is figured out, thereby acquiring a ciphertext block $C_2\_5944$.

These processings are similarly performed until $P_N\_5938$, thereby acquiring the ciphertext blocks $C_1\_5943$, $C_2\_5944$, ..., and $C_N\_5947$. Next, $NH_{R'}$ (S) is computed, selecting S as the input. Here, S results from connecting $C_1\_5943$, $C_2\_5944$, ..., and $C_{N/2}\_5945$ in this sequence. Moreover, the computed output from $NH_{R'}$ (S) is specified as $C_{N+1}\_5948$,

$NH_{R''}$ (S) is computed, and the output therefrom is specified as $C_{N+2}\_5949$. $C_1\_5943$, $C_2\_5944$, ..., $C_{N/2}\_5945$, ..., $C_N\_5947$, $C_{N+1}\_5948$, and $C_{N+2}\_5949$ are connected in this sequence, thereby acquiring a ciphertext C_5956.

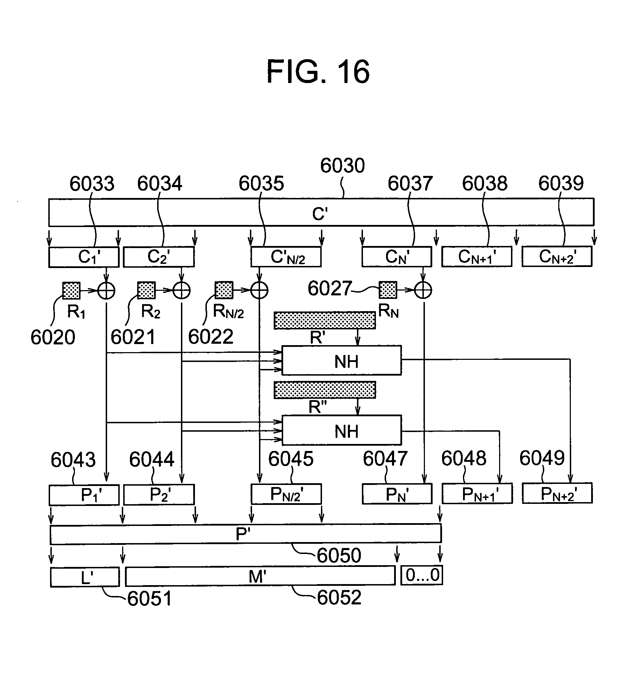

FIG. 16 is an explanatory diagram of the decryption processing.

A ciphertext C'_6030 is divided into 64-bit blocks, and the resultant blocks are specified as

$C'_1\_6033$, $C'_2\_6034$, ..., $C'_N\_6037$, $C'_{N+1}\_6038$, and $C'_{N+2}\_6039$. Next, $NH_R(S)$ is computed, selecting S as the input. Here, S results from connecting $C'_1\_6033$, $C'_2\_6034$, $C'_{N/2}\_6035$, ..., and $C'_N\_6037$ in this sequence. If $NH_{R'}(S) = C'_{N+1}\_6038$ and $NH_{R''}(S) = C'_{N+2}\_6039$, the processing proceeds to the next step.

An exclusive-OR logical sum of $C'_1\_6033$ with $R_1\_6020$ is figured out, thereby acquiring a plaintext block $P'_1\_6043$. An exclusive-OR logical sum of $C'_2\_6034$ with $R_2\_6031$ is figured out, thereby acquiring a plaintext block $P'_2\_6044$.

These processings are similarly performed until $C'_N\_6037$, thereby acquiring the plaintext blocks $P'_1\_6043$, $P'_2\_6044$, ..., and $P'_N\_6047$. After that, these blocks are connected in this sequence, then being specified as a plaintext $P'\_6050$. This plaintext $P'\_6050$ is divided into $L'\_6051$ and $M'\_6052$.

In the second embodiment, the pseudo random numbers are necessary for the two processings, i. e., the cryptographic processing and the message-authentication-code generation. Here, the length of the pseudo random numbers is substantially 1.5 times longer than that of the message. Also, on a computer where a general-purpose CPU is employed, the pseudo random-number generator according to the present embodiment allows the implementation of the random-number generation processings which are more than 2 times higher as compared with the ones by AES, i.e., the highest cipher among the block ciphers. From the consideration given above, the method according to the second embodiment allows the implementation of the processings which, on one and the same environment, are more than 4/3 times higher as compared with the iaPCBC mode which is the conventional technology.

Also, a theorem 2 in the document 2 where w = 32 and t = 2 are set is applied to the second embodiment. This makes it possible to accomplish the security proof. Namely, with respect to two different messages whose lengths are equal to each other, the provability that their message authentication codes become identical is equal to $2^{-64}$.

The specification and drawings are, accordingly, to be regarded in an illustrative rather than a restrictive sense. It will, however, be evident that various modifications and changes may be made thereto without departing from the spirit and scope of the invention as set forth in the claims.

**Claims**

1. An encryption apparatus for a common-key cipher, comprising:

   a unit (1009, step 2003) for generating a plurality of plaintext blocks $P_i$ ($1 \leq i \leq N$) resulting from separating a plaintext on a specific-length basis, the plaintext including redundant data and a message (1014);

   an encryption operation unit (1009, steps 2004 to 2005) for generating a random-number string R from a secret key (1011),

   generating random-number blocks $R_i$ ($1 \leq i \leq N+1$) from the random-number string R, and

   performing an encryption operation for ciphertext blocks $C_i$ ($1 \leq i \leq N+2$) by using the plaintext blocks $P_i$ ($1 \leq i \leq N$) and the random-number blocks $R_i$ ($1 \leq i \leq N+1$), the random-number string R being longer than the plaintext, the random-number blocks $R_i$ ($1 \leq i \leq N+1$) being used for the encryption corresponding to the plaintext blocks $P_i$ ($1 \leq i \leq N$); and

   an authentication operation unit ($NH_R(S)$, steps 2408 to 2409) for

   generating random-number blocks $R_i$ ($2 \leq i \leq N+1$) from the random-number string R, and

   performing an authentication operation for message-authentication-code blocks ($C_{N+1}$, $C_{N+2}$) by using the ciphertext blocks $C_i$ ($1 \leq i \leq N+2$) and the random-number blocks $R_i$ ($2 \leq i \leq N+1$), the random-number blocks $R_i$ ($2 \leq i \leq N+1$) being used for the authentication corresponding to the ciphertext blocks $C_i$ ($1 \leq i \leq N+2$).

2. The encryption apparatus for a common-key cipher according to Claim 1, wherein

   the encryption operation unit (1009, steps 2004 to 2005) and the authentication operation unit ($NH_R(S)$, steps 2408 to 2409) use the one or more random-number blocks $R_i$ ($1 \leq i \leq N+1$),

   the total-sum length of the one or more random-number blocks $R_i$ ($1 \leq i \leq N+1$) being longer than the total-sum length of the plaintext blocks $P_i$ ($1 \leq i \leq N$), and being shorter than two times the total-sum length of the plaintext blocks $P_i$ ($1 \leq i \leq N$).

3. The encryption apparatus for a common-key cipher according to Claim 2, wherein

   the encryption operation unit (1009, steps 2004 to 2005) performs a binomial operation or a monomial operation one or more times in accordance with predetermined processing steps, the binomial operation or the monomial operation using the plaintext blocks $P_i$ ($1 \leq i \leq N$),

   the authentication operation unit ($NH_R(S)$, steps 2408 to 2409) performing a binomial operation or a monomial operation one or more times in accordance with predetermined processing steps, the binomial operation or the monomial operation using the ciphertext blocks $C_i$ ($1 \leq i \leq N+2$),

   the encryption apparatus for a common-key cipher further comprising a unit (1009, step 2006) for combining the plurality of acquired ciphertext

blocks $C_i$ ($1 \leq i \leq N+2$) with the message-authentication-code blocks ($C_{N+1}$, $C_{N+2}$), and outputting the combined result as a ciphertext (1022).

4. The encryption apparatus for a common-key cipher according to Claim 2, wherein
the encryption operation unit (1009, steps 2004 to 2005) performs the encryption operation by an exclusive-OR logical sum,
the authentication operation unit ($NH_R(S)$, steps 2408 to 2409) performing the authentication operation by an arithmetic multiplication and an arithmetic addition.

5. The encryption apparatus for a common-key cipher according to Claim 2, wherein
the encryption operation unit (1009, steps 2004 to 2005) performs the encryption operation by an exclusive-OR logical sum,
the authentication operation unit ($NH_R(S)$, steps 2408 to 2409) performing the authentication operation by a multiplication on a finite field and an arithmetic addition.

6. The encryption apparatus for a common-key cipher according to Claim 2, wherein
the encryption operation unit (1009, steps 2004 to 2005) and the authentication operation unit ($NH_R(S)$, steps 2408 to 2409) share the random-number blocks $R_i$ ($1 \leq i \leq N+1$) used by the encryption operation unit (1009, steps 2004 to 2005) and the authentication operation unit ($NH_R(S)$, steps 2408 to 2409).

7. The encryption apparatus for a common-key cipher according to Claim 2, wherein
the encryption operation unit (1009, steps 2004 to 2005) and the authentication operation unit ($NH_R(S)$, steps 2408 to 2409) use the random-number blocks $R_i$ ($1 \leq i \leq N+1$) which differ from each other.

8. The encryption apparatus for a common-key cipher according to Claim 2, further comprising a pseudo random-number generation unit (1010) for generating the random-number string R from said secret key (1011).

9. The encryption apparatus for a common-key cipher according to Claim 8, further comprising:

a unit (1009, steps 2003 and 2206) for dividing the message (1014) into a plurality of messages (1014), the psuedo random-number generation unit (1010) generating the random-number string R whose random numbers are equivalent to the divided messages (1014) in number; and

a unit for allocating either of the divided messages (1014) and the random-number string R to different operation units each, and thereby causing a parallel processing to be performed.

10. A decryption apparatus for a common-key cipher, comprising:
a unit (1020, step 2503) for generating a plurality of ciphertext blocks $C'_i$ ($1 \leq i \leq N+2$) resulting from separating a ciphertext (1022) on a specific-length basis;
an authentication operation unit ($NH_R(S)$, and 1020, steps 2504 to 2505) for
generating a random-number string R from a secret key (1011),
generating random-number blocks $R_i$ ($1 \leq i \leq N+1$) from the random-number string R, and
performing an authentication operation for message-authentication-code blocks ($C'_{N+1}$, $C'_{N+2}$) by using the ciphertext blocks $C'_i$ ($1 \leq i \leq N+2$) and the random-number blocks $R_i$ ($1 \leq i \leq N+1$), the random-number string R being longer than the ciphertext (1022), the random-number blocks $R_i$ ($1 \leq i \leq N+1$) being used for the authentication corresponding to the ciphertext blocks $C'_i$ ($1 \leq i \leq N+2$); and
a decryption operation unit (1020, step 2508) for
generating random-number blocks $R_i$ ($1 \leq i \leq N$) from the random-number string R, and
performing a decryption operation for plaintext blocks $P'_i$ ($1 \leq i \leq N$) by using the ciphertext blocks $C'_i$ ($1 \leq i \leq N+2$) and the random-number blocks $R_i$ ($1 \leq i \leq N$), the random-number blocks $R_i$ ($1 \leq i \leq N$) being used for the decryption corresponding to the ciphertext blocks $C'_i$ ($1 \leq i \leq N+2$).

11. The decryption apparatus for a common-key cipher according to Claim 10, wherein
the authentication operation unit ($NH_R(S)$, and 1020, steps 2504 to 2505) and the decryption operation unit (1020, step 2508) use the one or more random-number blocks $R_i$ ($1 \leq i \leq N+1$),
the total-sum length of the one or more random-number blocks $R_i$ ($1 \leq i \leq N+1$) being longer than the total-sum length of the plaintext blocks $P'_i$ ($1 \leq i \leq N$), and being shorter than two times the total-sum length of the plaintext blocks $P'_i$ ($1 \leq i \leq N$).

12. The decryption apparatus for a common-key cipher according to Claim 11, further comprising:

a unit for connecting the plurality of plaintext blocks $P'_i$ ($1 \leq i \leq N$) thereby to generate a plaintext;
a unit for extracting redundant data included in the plaintext; and
a unit for checking the redundant data thereby to detect the presence or absence of a forgery that may have been performed to the ciphertext (1022).

13. A program-storing medium (1005) which stores a program (1009, 1010) for allowing a computer (1002) to execute an encryption processing for a common-key cipher, wherein

the program (1009, 1010) allows the computer (1002)

to generate a plurality of plaintext blocks $P_i$ ($1 \leq i \leq N$) resulting from separating a plaintext on a specific-length basis, the plaintext including redundant data and a message (1014);

to generate a random-number string R from a secret key (1011),

to generate random-number blocks $R_i$ ($1 \leq i \leq N+1$) from the random-number string R, and

to perform an encryption operation for ciphertext blocks $C_i$ ($1 \leq i \leq N+2$) by using the plaintext blocks $P_i$ ($1 \leq i \leq N$) and the random-number blocks $R_i$ ($1 \leq i \leq N+1$), the random-number string R being longer than the plaintext, the random-number blocks $R_i$ ($1 \leq i \leq N+1$) being used for the encryption corresponding to the plaintext blocks $P_i$ ($1 \leq i \leq N$); and

to generate random-number blocks $R_i$ ($2 \leq i \leq N+1$) from the random-number string R, and

to perform an authentication operation for message-authentication-code blocks ($C_{N+1}$, $C_{N+2}$) by using the ciphertext blocks $C_i$ ($1 \leq i \leq N+2$) and the random-number blocks $R_i$ ($2 \leq i \leq N+1$), the random-number blocks $R_i$ ($2 \leq i \leq N+1$) being used for the authentication corresponding to the ciphertext blocks $C_i$ ($1 \leq i \leq N+2$).

14. The program-storing medium (1005) according to Claim 13, wherein

the encryption operation and the authentication operation use the one or more random-number blocks $R_i$ ($1 \leq i \leq N+1$),

the total-sum length of the one or more random-number blocks $R_i$ ($1 \leq i \leq N+1$) being longer than the total-sum length of the plaintext blocks $P_i$ ($1 \leq i \leq N$), and being shorter than two times the total-sum length of the plaintext blocks $P_i$ ($1 \leq i \leq N$).

15. The program-storing medium (1005) according to Claim 14, wherein

the program (1009, 1010) allows the computer (1002)

to perform, as the encryption operation, a binomial operation or a monomial operation one or more times in accordance with predetermined processing steps, the binomial operation or the monomial operation using the plaintext blocks $P_i$ ($1 \leq i \leq N$);

to perform, as the authentication operation, a binomial operation or a monomial operation one or more times in accordance with predetermined processing steps, the binomial operation or the monomial operation using the ciphertext blocks $C_i$ ($1 \leq i \leq N+2$); and

to combine the plurality of acquired ciphertext blocks $C_i$ ($1 \leq i \leq N+2$) with the message-authentication-code blocks ($C_{N+1}$, $C_{N+z}$), and to output the combined result as a ciphertext (1022).

16. The program-storing medium (1005) according to Claim 14, wherein

the program (1009, 1010) allows the computer (1002)

to perform the encryption operation by an exclusive-OR logical sum, and

to perform the authentication operation by an arithmetic multiplication and an arithmetic addition.

17. The program-storing medium (1005) according to Claim 14, wherein

the program (1009, 1010) allows the computer (1002)

to perform the encryption operation by an exclusive-OR logical sum, and

to perform the authentication operation by a multiplication on a finite field and an arithmetic addition.

18. The program-storing medium (1005) according to Claim 14, wherein

the program (1009, 1010) allows the encryption operation and the authentication operation to share the random-number blocks $R_i$ ($1 \leq i \leq N+1$) used by the encryption operation and the authentication operation.

19. The program-storing medium (1005) according to Claim 14, wherein

the program (1009, 1010) allows the computer (1002) to perform a pseudo random-number generation processing for generating the random-number string R from said secret key (1011).

20. The program-storing medium (1005) according to Claim 19, wherein

the program (1009, 1010) allows the computer (1002)

to divide the message (1014) into a plurality of messages (1014);

to generate, by the psuedo random-number generation processing, the random-number string R whose random numbers are equivalent to the divided messages (1014) in number; and

to allocate either of the divided messages (1014) and the random-number string R to different operation units each, and thereby to perform a parallel processing.

21. A program-storing medium (1016) which stores programs (1020, 1021) for allowing a computer (1003) to execute a decryption processing for a common-key cipher, wherein

the program (1020, 1021) allows the computer (1003)

to generate a plurality of ciphertext blocks $C'_i$ ($1 \leq i \leq N+2$) resulting from separating a ciphertext (1022) on a specific-length basis;

to generate a random-number string R from a secret key (1011),

to generate random-number blocks $R_i$ ($1 \leq i \leq N+1$) from the random-number string R, and

to perform an authentication operation for message-authentication-code blocks ($C'_{N+1}$, $C'_{N+2}$) by using the ciphertext blocks $C'_i$ ($1 \leq i \leq N+2$) and the random-number blocks $R_i$ ($1 \leq i \leq N+1$), the random-number string R being longer than the ciphertext (1022), the random-number blocks $R_i$ ($1 \leq i \leq N+1$) being used for the authentication corresponding to the ciphertext blocks $C'_i$ ($1 \leq i \leq N+2$); and

to generate random-number blocks $R_i$ ($1 \leq i \leq N$) from the random-number string R, and

to perform a decryption operation for plaintext blocks $P'_i$ ($1 \leq i \leq N$) by using the ciphertext blocks $C'_i$ ($1 \leq i \leq N+2$) and the random-number blocks $R_i$ ($1 \leq i \leq N$), the random-number blocks $R_i$ ($1 \leq i \leq N$) being used for the decryption corresponding to the ciphertext blocks $C'_i$ ($1 \leq i \leq N+2$).

22. The program-storing medium (1016) according to Claim 21, wherein

the program (1020, 1021) allows the decryption operation and the authentication operation to use the one or more random-number blocks $R_i$ ($1 \leq i \leq N+1$),

the total-sum length of the one or more random-number blocks $R_i$ ($1 \leq i \leq N+1$) being longer than the total-sum length of the plaintext blocks $P'_i$ ($1 \leq i \leq N$), and being shorter than two times the total-sum length of the plaintext blocks $P'_i$ ($1 \leq i \leq N$).

23. The program-storing medium (1016) according to Claim 22, wherein

the program (1020, 1021) allows the computer (1003)

to connect the plurality of plaintext blocks $P'_i$ ($1 \leq i \leq N$) thereby to generate a plaintext;

to extract redundant data included in the plaintext; and

to check the redundant data thereby to detect the presence or absence of a forgery that may have been performed to the ciphertext (1022).

# FIG. 1

COMPUTER A 1002    1005

RAM

1009 — ENCRYPTION PROCESSING PROGRAM PROG1

1010 — RANDOM-NUMBER GENERATION PROCESSING PROGRAM PROG2

1011 — SECRET KEY K

1013

INITIAL VECTOR I

1007 — DISPLAY

1008 — KEYBOARD

1004 — CPU

MESSAGE M

1014

1006 — NETWORK INTERFACE

CIPHERTEXT C — 1022

RAM 1016

1020 — DECRYPTION PROCESSING PROGRAM PROG3

1021 — RANDOM-NUMBER GENERATION PROCESSING PROGRAM PROG2

1011 — SECRET KEY K

1013

INITIAL VECTOR I

NETWORK 1001

1018 — DISPLAY

1019 — KEYBOARD

1015 — CPU

1017 — NETWORK INTERFACE

COMPUTER B    1003

# FIG. 2

PLAINTEXT PREPARATION

START — 2201

↓

AWAITING INPUT OF MESSAGE M — 2202

↓

ADDING, TO FRONT-END OF MESSAGE, 64-BIT-LENGTH BIT STRING FOR INDICATING BIT LENGTH OF MESSAGE — 2203

↓

ADDING BIT STRING OF 0s TO REAR-END OF MESSAGE, AND THEREBY CONVERTING MESSAGE LENGTH INTO MULTIPLE OF 128 — 2204

↓

SEPARATING MESSAGE ON 64-BIT BASIS, AND SPECIFYING RESULTANT MESSAGES AS P1, P2, ⋯, AND $P_N$ — 2206

↓

END — 2207

# FIG. 3

RANDOM-NUMBER GENERATION

START — 2301

↓

AWAITING INPUT OF AFTER-PADDING MESSAGE-BLOCK NUMBER N, SECRET KEY K, AND INITIAL VECTOR I — 2302

↓

GENERATING RANDOM NUMBER R BY USING RANDOM-NUMBER GENERATION PROCESSING PROGRAM PROG2: KEY K IS 64N BITS IN LENGTH — 2303

↓

SEPARATING R ON 64-BIT BASIS, AND SPECIFYING RESULTANT RANDOM NUMBERS AS $R_1$, $R_2$, ⋯, AND $R_{N+1}$ — 2304

↓

END — 2310

EP 1 508 994 A2

# FIG. 4

ENCRYPTION

START — 2401

Set i=1 — 2403

$C_i = M_i \char94 R_i$ — 2404

2406
$i=N?$   NO → i=i+1 — 2407

YES

$S = C_1\|C_2...C_{N-1}\|C_N$
$R = R_2\|R_3...R_{N-1}\|R_N$ — 2408

$C_{N+1}\|C_{N+2} = NH_R(S)$ — 2409

END

14

# FIG. 5

DECRYPTION PROCESSING PROGRAM PROG3

START —2501

SETTING DATA —2502

PREPARING CIPHERTEXT —2503

GENERATING RANDOM NUMBER —2504

GENERATING MESSAGE AUTHENTICATION CODE —2505

FORGED? —2506

YES

2507

OUTPUTTING REJECTION

NO

DECRYPTION —2508

CUTTING OUT PLAINTEXT —2509

SAVING MESSAGE M' INTO MEMORY —2510

END —2511

# FIG. 6

CIPHERTEXT
PREPARATION

START — 2601

AWAITING INPUT OF CIPHERTEXT C' — 2602

SEPARATING C' ON 64-BIT BASIS, AND SPECIFYING
RESULTANT CIPHERTEXTS AS $C'_1, C'_2, \cdots, C'_{N+1}$, AND $C'_{N+2}$ — 2603

END — 2604

# FIG. 7

DECRYPTION

START — 2701

Set i=1 — 2703

$P_i' = C_i'\text{^}R_i$ — 2704

2707

i=i+1

2706

i=N? — NO

YES

END — 2708

# FIG. 8

PLAINTEXT CUT-OUT

START — 2801

SET L': FIRST 64 BITS (i.e., $P'_1$) OF DECRYPTED TEXT — 2802

SET M': REMAINING L' BITS OF DECRYPTED TEXT — 2803

END — 2804

# FIG. 9

# FIG. 10

# FIG. 11

# FIG. 12

```
┌─────────────────┐
│ RANDOM-NUMBER   │   ( START )──5301
│ GENERATION 2    │
└─────────────────┘
          │
          ▼
┌──────────────────────────────────────────────────────┐
│ AWAITING INPUT OF AFTER-PADDING MESSAGE-BLOCK         │──5302
│ NUMBER N, SECRET KEY K, AND INITIAL VECTOR I          │
└──────────────────────────────────────────────────────┘
          │                                    ──5303
          ▼
┌──────────────────────────────────────────────────────────┐
│ GENERATING RANDOM NUMBER R BY USING RANDOM-NUMBER GENERATION │
│ PROCESSING PROGRAM PROG2: KEY K IS 64(3N/2+1) BITS IN LENGTH │
└──────────────────────────────────────────────────────────┘
          │
          ▼
┌──────────────────────────────────────────────────┐
│ SEPARATING R ON 64-BIT BASIS, AND SPECIFYING      │──5304
│ RESULTANT RANDOM NUMBERS AS $R_1$, $R_2$, ···, AND $R_{3N/2+1}$ │
└──────────────────────────────────────────────────┘
          │
          ▼
┌──────────────────────────────────────────────────┐
│ SETTING $R' = R_{N+1}||,...,||R_{3N/2}$           │──5305
└──────────────────────────────────────────────────┘
          │
          ▼
┌──────────────────────────────────────────────────┐
│ SETTING $R'' = R_{N+2}||,...,||R_{3N/2+1}$        │──5306
└──────────────────────────────────────────────────┘
          │
          ▼
      ( END )──5310
```

# FIG. 13

ENCRYPTION 2

START — 5401

Set i=1 — 5403

$C_i = M_i \char`^ R_i$ — 5404

5406

i=i+1

i=N ? — 5405

NO

YES

Set i=1 — 5407

SEPARATING $C_i$ ON 32-BIT BASIS, AND SPECIFYING RESULTANT BLOCKS AS $C_{i,H}$ AND $C_{i,L}$ — 5408

5410

i=i+1

i=N/2 ? — 5409

NO

YES

$S = C_{1,H} || C_{1,L} ||,,,|| C_{N/2,H} || C_{N/2,L}$ — 5411

$C_{N+1} = NH_{R'}(S)$ — 5412

$C_{N+2} = NH_{R''}(S)$ — 5413

END

# FIG. 14

DECRYPTION
PROCESSING
PROGRAM 2

START — 5501

SETTING DATA — 5502

PREPARING CIPHERTEXT — 5503

GENERATING RANDOM NUMBER — 5504

GENERATING MESSAGE AUTHENTICATION CODE — 5505

5506

FORGED? — YES

NO

5507

DECRYPTION — 5508

OUTPUTTING
REJECTION

CUTTING OUT PLAINTEXT — 5509

SAVING MESSAGE M' INTO MEMORY — 5510

END — 5511

# FIG. 15

# FIG. 16

# FIG. 17

RANDOM-
NUMBER →
GENERATION

R1    R2    R3    R4         RN

RANDOM NUMBERS
USED FOR ENCRYPTION
PROCESSING

RANDOM NUMBERS USED FOR
MESSAGE-AUTHENTICATION-CODE
GENERATION